Europäisches Patentamt

European Patent Office

Office européen des brevets

(11) Numéro de publication : **0 458 675 B1**

(12) ## FASCICULE DE BREVET EUROPEEN

(45) Date de publication du fascicule du brevet :
**17.08.94 Bulletin 94/33**

(51) Int. Cl.$^5$ : **B01J 23/94**, B01J 38/50,
B01J 38/62

(21) Numéro de dépôt : **91401225.7**

(22) Date de dépôt : **10.05.91**

(54) **Nouveau procédé de régénération d'un catalyseur usagé par une solution aqueuse de péroxyde d'hydrogène stabilisée par un composé organique.**

(30) Priorité : **23.05.90 FR 9006558**

(43) Date de publication de la demande :
**27.11.91 Bulletin 91/48**

(45) Mention de la délivrance du brevet :
**17.08.94 Bulletin 94/33**

(84) Etats contractants désignés :
**AT BE DE DK ES GB IT LU NL**

(56) Documents cités :
**DE-A- 2 948 771**

(56) Documents cités :
**DE-A- 3 151 805**
**FR-A- 2 108 424**
**US-A- 4 714 688**
**US-A- 4 830 997**

(73) Titulaire : **INSTITUT FRANCAIS DU PETROLE**
**4, Avenue de Bois Préau**
**F-92502 Rueil-Malmaison (FR)**

(72) Inventeur : **Trinh Dinh, Chan**
**7, Allée des Oeillets**
**F-78110 Le Vesinet (FR)**
Inventeur : **Llido, Eric**
**Le Clos des Vignes**
**F-69360 SEREZIN DU RHONE (FR)**

EP 0 458 675 B1

Jouve, 18, rue Saint-Denis, 75001 PARIS

## Description

La présente invention concerne un procédé de régénération d'un catalyseur au moins partiellement désactivé provenant du traitement d'une charge d'hydrocarbures renfermant au moins un hétéro-élément du groupe soufre, oxygène et azote et au moins un métal du groupe vanadium, nickel et/ou fer, ladite désactivation provenant du dépôt desdits métaux sur le catalyseur initialement constitué d'un support minéral et d'au moins un métal actif du groupe VIB et/ou VIII au moins en partie à l'état de sulfure.

Par métal du groupe VIB et VIII, on entend les métaux tels que molybdène, tungstène, cobalt, nickel notamment.

Par support minéral, on entend les oxydes réfractaires du groupe aluminium et/ou silicium tels que par exemple le trioxyde d'aluminium ou le dioxyde de silicium notamment.

La présente invention est relative plus particulièrement à la régénération des catalyseurs d'hydrotraitement et/ou d'hydroconversion des bruts de pétrole et des fractions pétrolières à point d'ébullition élevé, par exemple, supérieur à 350°C tels que les résidus de la distillation atmosphérique ou sous-vide, une huile de schistes ou de sable bitumeux, une fraction d'asphalte ou une fraction d'hydrocarbures liquides résultant de la liquéfaction du charbon, des gas-oils atmosphériques ou sous-vide ou encore des fuels.

Dans les opérations d'hydrotraitement (hydrodésulfuration, hydrodémétallation, hydrodéazotation) le catalyseur utilisé se couvre peu à peu des dépôts de carbone et des métaux qui proviennent des charges lourdes traitées.

Par métal on doit comprendre vanadium, nickel et/ou fer qui sont les trois plus importants parmi les métaux présents mais l'invention ne se limitera pas à ces seuls trois métaux.

La rétention des métaux et du carbone sur le support du catalyseur provoque des diminutions de volume poreux et de la surface spécifique qui par voie de conséquence limite la diffusion des molécules d'hydrocarbures vers les sites catalytiques à l'intérieur du grain du catalyseur. Il s'ensuivit une perte progressive d'activité catalytique qui peut être totale lorsque tous les pores sont remplis de vanadium, nickel et/ou fer.

La régénération des catalyseurs désactivés par les dépôts de carbone et des métaux cités a fait l'objet de nombreuses publications et demandes de brevets d'invention.

Il est connu de l'Homme de l'Art, qu'il est généralement très difficile d'éviter une extraction importante du métal actif du groupe molybdène et/ou tungstène pour un traitement chimique d'élimination efficace des métaux contaminants du groupe vanadium, nickel et/ou fer d'un catalyseur usagé.

Le brevet U.S.A. 3 108-972 avait fait la démonstration que l'utilisation d'une solution aqueuse de sulfures et/ou de polysulfures d'ammonium permettait d'éviter l'extraction de molybdène d'un catalyseur conventionnel d'hydrotraitement. Cependant un tel traitement était totalement inefficace pour l'élimination du dépôt contaminant de nickel. D'autre part, l'utilisation d'une solution aqueuse de sulfures et/ou de polysulfures d'ammonium à une concentration d'au moins égale à 10% poids conduit à une solution d'extraction très polluante et induit une pollution inévitable de l'atmosphère par le dégagement important du monosulfure d'hydrogène.

Le brevet U.S.A. 4.501.820 décrivait un procédé d'extraction sélective des métaux contaminant nickel et vanadium d'un catalyseur de départ contenant du tungstène déposé sur support d'alumine. L'extraction du tungstène était inférieure ou égale à 10% poids. Le réactif d'extraction utilisé était une solution aqueuse diluée d'acide nitrique de 0,5 normalité.

Pour obtenir une démétallation efficace des métaux contaminants, le catalyseur usagé après calcination par de l'air devait être réduite à l'état de poudre inférieure à 200 mesh et traité par de la vapeur d'eau à une température comprise entre 923-924°C. Il s'ensuit que ce procédé ne permettait donc pas de préserver les formes physiques habituelles bille ou extrudé du catalyseur de départ et une résistance mécanique suffisante du catalyseur régénéré.

L'objet de la présente invention est la régénération d'un catalyseur, caractérisée par une extraction très limitée des métaux du groupe molybdène et/ou tungstène tout en évitant les inconvénients des procédés précités.

Le système de réactifs chimiques d'extraction des métaux du groupe VIII (vanadium, nickel et/ou fer) utilisé est une solution aqueuse d'eau oxygénée renfermant un composé organique stabilisateur.

Les composés organiques qui stabilisent très bien les solutions aqueuses de péroxyde d'hydrogène au contact des métaux des catalyseurs et des ions métalliques de la solution d'extraction sont choisis de préférence dans le groupe formé par les acides carboxyliques tels que l'acide oxalique, l'acide (+) ascorbique, l'acide glycolique, l'acide citrique, l'acide maléïque, l'acide salicylique ou dans le groupe formé par les alcools tels que le 1-4 butanediol, le phénol, le tertiobutanol, le paracrésol.

Parmi ces nombreux composés stabilisateurs, on préfère l'acide oxalique pour un double avantage qui sont liés à un pouvoir stabilisateur le plus efficace et un coût d'utilisation le plus économique .

Une telle stabilisation permet de limiter efficacement la décomposition catalytique du péroxyde d'hydrogène en eau et en oxygène gazeux par voie de conséquence d'obtenir une extraction élevée des métaux pour une consommation réduite et économique du péroxyde d'hydrogène.

Les travaux antérieurs du demandeur qui ont fait l'objet des brevets U.S.A. 4.714.688 et US.A 4830 997, ont déjà démontré les avantages d'une telle stabilisation par rapport aux procédés concurrents utilisant une solution d'eau oxygénée non stabilisée par exemple tels que ceux décrits dans les brevets U.S.A 3.562.150, U.S.A 4.101.444 et U.S.A. 4.268.415 .

Cependant le traitement de la démétallation des métaux contaminants vanadium et nickel d'un catalyseur usagé après calcination par de l'air c'est-à-dire à partir des métaux à l'état d'oxyde par une solution d'eau oxygénée stabilisée conduisait également à une extraction importante de molybdène et/ou de tungstène.

Il est connu de l'Homme de l'Art que l'hydrodésulfuration majoritaire d'une charge pétrolière nécessite la présence d'un de ces deux métaux du groupe VIB ou leurs mélanges dans un catalyseur d'hydrotraitement.

La caractéristique fondamentale de la présente invention est que l'on découvre pour la première fois que les sulfures des métaux du groupe VIB tels que les sulfures de molybdène ($MoS_3$) et les sulfures de tungstène ($WS2$ et/ou $WS3$) ne sont pas oxydables par le péroxyde d'hydrogène en solution aqueuse donc non extractables si on traite un catalyseur usagé à partir des métaux à l'état de sulfure.

Les métaux contaminants vanadium et nickel sont par contre oxydés en sulfates solubles dans le milieu aqueux réactionnel :

$$NiS + 4\ H_2O_2 \rightarrow NiSO_4 + 4H_2O$$
$$V_2S_3 + 14\ H_2O_2 \rightarrow (VO)_2(SO_3)_3 + 14\ H_2O$$

ou

$$V_2S_3 + 16\ H_2O_2 \rightarrow (VO)_2(SO_3)_3 + 16\ H_2O$$

les avantages de la stabilisation d'une solution d'eau oxygénée sont également conservés dans le cas présent du traitement d'un catalyseur dont les métaux sont à l'état de sulfure.

**Schéma 1 (gauche):**

- catalyseur usagé
- Elimination d'huile adhérente (strippage)
- Elimination solvant strippage
- Extraction métaux par $H_2O_2/H_2O$ stabilisée
- séparation catalyseur démétallé
- séchage catalyseur séparé
- calcination Air catalyseur séché
- sulfuration catalyseur calciné
- catalyseur régénéré

**Schéma 2 (droite):**

- catalyseur usagé
- Elimination d'huile adhérente (strippage)
- Elimination solvant strippage
- calcination Air Catalyseur strippé
- sulfuration catalyseur calciné
- Extraction métaux par $H_2O_2/H_2O$ stabilisée
- Séparation catalyseur démétallé
- séchage catalyseur séparé sous atmosphère inerte
- catalyseur régénéré

SCHEMAS RECAPITULATIFS

4

Conformément à la présente invention, on peut opérer l'un quelconque des deux principaux modes opératoires de traitement de régénération d'un catalyseur usagé selon les 2 schémas récapitulatifs ci-dessus, selon les revendications 1 à 9, et selon les descriptions ci-après :

La première étape commune de ces deux modes opératoires consiste en une élimination d'huiles adhérentes des catalyseurs déchargés des unités d'hydrotraitement ou d'hydroconversion par un strippage par un solvant aromatique tel que par exemple le toluène ou du gas-oil ou tout autre moyen connu.

Le premier mode opératoire que l'on peut mettre en oeuvre comporte ensuite des étapes successives suivantes :

a) on met en contact le catalyseur strippé avec une solution aqueuse de péroxyde d'hydrogène renfermant au moins un composé organique stabilisateur de façon à enlever au moins 10% des métaux déposés du groupe vanadium, nickel et/ou fer.

b) on sépare le catalyseur démétallé de l'étape a) de la solution d'extraction des métaux.

c) on sèche le catalyseur séparé de l'étape b).

d) on calcine le catalyseur séché de l'étape c) en présence d'un gaz renfermant de l'oxygène de façon à éliminer au moins 90% de carbone.

e) on sulfure le catalyseur calciné de l'étape d) en présence de monosulfure d'hydrogène gazeux pur ou en mélange avec de l'hydrogène ou par un sulfure liquide en solution dans du gas-oil ou tout autre hydrocarbure saturé ou aromatique de façon à transformer les oxydes métalliques au moins à 90% en sulfures correspondants.

En référence au mode opératoire 2 de la présente invention, le catalyseur usagé après strippage peut être régénéré selon les étapes successives suivantes :

a) on calcine le catalyseur strippé en présence d'un gaz renfermant de l'oxygène de façon à éliminer au moins 90% de carbone.

b) on sulfure le catalyseur calciné de l'étape a) en présence de monosulfure d'hydrogène gazeux pur ou en mélange avec de l'hydrogène ou par un sulfure liquide en solution dans du gas-oil ou tout autre hydrocarbure saturé ou aromatique de façon à transformer les oxydes métalliques au moins à 90% en sulfures correspondants.

c) On met en contact le catalyseur sulfuré de l'étape b) avc une solution aqueuse de péroxyde d'hydrogène renfermant au moins un composé organique stabilisateur de façon à enlever au moins 10% des métaux déposés du groupe vanadium, nickel et/ou fer et,

d) on sépare le catalyseur démétallé de l'étape c)

e) on sèche le catalyseur séparé de l'étape d) sous atmosphère inert pour enlever au moins 90% d'humidité et pour éviter toute oxydation des sulfures métalliques restants non extraits.

Les conditions opératoires des diverses étapes communes décrites précédemment dans ces deux modes opératoires de traitement de la régénération d'un catalyseur usagé sont les suivantes :

Les conditions opératoires de la calcination par de l'air sont ajustées de manières à éliminer au moins 90% de carbone de préférence égale ou supérieure à 99%. D'une façon générale, les températures de calcination peuvent se situer dans l'intervalle compris entre 300 à 600°C et de préférence entre 450°C et 550°C. Dans ces conditions, la structure initiale du support alumine du catalyseur n'est pas modifiée.

Les rapports moles oxygène de l'air par rapport à la somme totale du carbone, du soufre et des métaux du catalyseur doivent être au moins égaux à 2, de préférence entre 5 et 10.

Les débits horaires d'air doivent être suffisants pour évacuer rapidement l'anhydride sulfureux et/ou sulfurique formé vers l'extérieur du four de calcination, ce qui permet d'éviter toute transformation de 1' alumine en sulfates d'aluminium. Par exemple pour la calcination de 200 grammes de catalyseur d'hydrotraitement usagé, un débit d'air égale à 60 litres/heure est nécessaire.

En ce qui concerne l'étape e) du mode opératoire 1 ou l'étape b) du mode opératoire 2, pour la sulfuration des oxydes métalliques du catalyseur calciné, on peut utiliser indifféremment un mélange gazeux de 2 à 3% de monosulfure d'hydrogène et de l'hydrogène ou une solution de diméthylsulfure à 2% poids dilué dans du gas-oil.

La température de sulfuration peut se situer dans l'intervalle compris entre 300 à 500°C, de préférence entre 350-400°C.

Pour le cas de la sulfuration par un mélange gazeux $H_2S$ et $H_2$, une durée de 2 à 5 heures est suffisante si les débits horaires sont compris entre 40 à 20 litres.

La sulfuration par une solution de diméthylsulfure dans du gas-oil, à 350°C et à VVH = 2 nécessite au moins 5 heures.

En ce qui concerne les opérations de séchage du catalyseur, on utilise généralement une température modérée comprise entre 100 à 200°C. de préférence autour de 150°C. Le catalyseur chargée d'eau provenant de l'étape précédente d'extraction des métaux peut être ainsi débarrassé pratiquement au moins 99% d'humidité si la durée de séchage est suffisante d'au moins égale à 12 heures. Dans le cas où le taux d'humidité reste relativement élevée, on constate une perte de résistance mécanique du catalyseur à l'étape suivante de calcination d) du mode opératoire 1 donc du catalyseur régénéré final. D'autre part, pour le cas du catalyseur démétallé et séparé de l'étape d) du mode opératoire 2, l'opération du séchage doit être en plus être effectué à l'abri de l'air autrement dit en atmosphère inerte par exemple en atmosphère azote pour conserver les sulfures métalliques non extraits du catalyseur régénéré, prêt à être réutilisé.

En ce qui concerne la solution de péroxyde d'hydrogène stabilisée les concentrations des réactifs que l'on peut utiliser sont généralement situées entre les valeurs indiquées ci-après :

la concentration du composé organique stabilisateur que l'on peut utiliser est comprise par exemple entre 0.1 gramme par litre et la saturation, de préférence entre 2 à 10 grammes par litre et de manière encore plus préférée entre 3 à 7 grammes par litre.

Les solutions aqueuses peuvent contenir de 0.5 à 70% en poids de péroxyde d'hydrogène, de préférence entre 1 à 30% poids et de manière encore plus préférée entre 3 à 10% en poids.

La température de réaction peut varier de 25 à 90°C, mais on préfère opérer dans la zone comprise entre 50 et 60°C, ce qui permet une démétallation maximale des métaux contaminants vanadium et nickel pour un rapport moles $H_2O_2$/atome-grammes de nickel et vanadium le plus bas donc un coût minimal.

L'opération d'extraction des sulfures de vanadium et de nickel du catalyseur par une solution aqueuse de péroxyde d'hydrogène stabilisée peut être effectuée soit en lit fixe, soit par charges successives (batch) ou en lit fluidisé.

L'utilisation d'un lit bouillonnant obtenu par la technique de fluidisation est préférée en ce sens qu'elle permet d'éviter de nombreux inconvénients liés à un lit fixe ou un batch habituellement utilisés dans les procédés connus.

Les principaux avantages de cette technique sont :

- optimum de contact intime entre le catalyseur et la solution aqueuse de péroxyde d'hydrogène stabilisée permettant d'obtenir un taux élevé de la démétallation.
- Brassage énergique et homogène entre le catalyseur et la solution d'eau oxygénée stabilisée permettant un échange thermique efficace et l'obtention d'une excellente régulation de la température.
- Evacuation de l'oxygène dégagé au cours de la réaction d'extraction des métaux par le péroxyde d'hydrogène : le réacteur ouvert du lit bouillonnant travaillant à la pression atmosphérique évite la formation des poches de gaz où la vaporisation du péroxyde d'hydrogène pourrait atteindre rapidement la limite d'inflammabilité ce qui est souvent le cas dans l'utilisation d'un lit fixe avec une mauvaise évacuation de la chaleur dégagée de la réaction très exothermique d'extraction des métaux.

Un réacteur en lit bouillonnant conçu spécialement pour l'opération de la démétallation d'un catalyseur usagé par une solution aqueuse de péroxyde d'hydrogène stabilisée et son fonctionnement a déjà fait l'objet d'un dépôt de brevet français FR-A-2589.368 suite aux travaux antérieurs du demandeur.

Les débits horaires de pompage de la solution d'eau oxygénée doivent être réglés de manière à ce que la vitesse linéaire se trouve dans l'intervalle comprise entre 0,5 et 5,0 cm/s, et de préférence entre 1 et 1,5 cm/s.

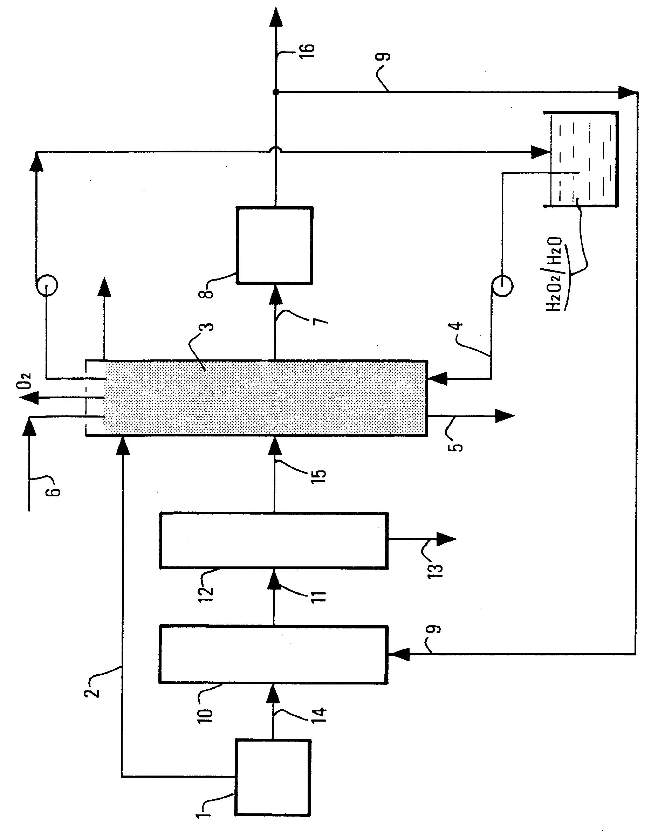

Un schéma d'ensemble des différentes opérations successives pour la mise en oeuvre du présent procédé de la régénération d'un catalyseur usagé est représenté à la figure unique.

En référence tout d'abord au mode opératoire 1 selon l'invention, le catalyseur déchargé d'un réacteur d'hydrotraitement ou d'hydroconversion d'une charge pétrolière est strippé (1).

Le catalyseur strippé est ensuite introduit par le signe (2) dans le réacteur de lit bouillonnant (3), thermostaté par exemple par une circulation d'eau réglée à la température désirée.

Une solution aqueuse de péroxyde d'hydrogène stabilisée selon l'invention est envoyée par la ligne (4) dans le lit bouillonnant (3).

Lorsque la démétallation du catalyseur dans le réacteur (3) est terminée, on soutire la solution d'extraction vers l'extérieur par la ligne 5.

Le catalyseur démétallé est lavé par de l'eau permutée introduite par la ligne (6) jusqu'à ce que l'eau de lavage sortie par la ligne (5) soit incolore.

Le catalyseur lavé est déchargé du réacteur (3) par la ligne (7), et envoyé dans une étuve (8) pour être séché.

Le catalyseur après séchage dans l'étuve (8) est récupérée et envoyé par la ligne (9) dans un four de calcination (10).

Après calcination, le catalyseur est transféré par la ligne (11) dans un réacteur de sulfuration (12).

Enfin le catalyseur sulfuré est sorti du réacteur (12) par la ligne (13) et prêt à être réutilisé pour une nouvelle opération d'hydrotraitement ou d'hydroconversion de la charge pétrolière.

Selon le mode opératoire 2 de la présente invention, le catalyseur après strippage (1) n'est pas envoyé directement dans le lit bouillonnant mais transféré dans le four de calcination (10) par la ligne (14). Après calcination, le catalyseur est acheminé par la ligne (11) dans le réacteur de sulfuration (12). Le catalyseur après sulfuration est seulement ensuite introduit dans le réacteur de lit bouillonnant (3) par la ligne (15).

Toutes les opérations suivantes tels que le lavage, le séchage du catalyseur après démétallation sont identiques à celles décrites précédemment dans le mode opératoire 1 sauf que le séchage dans l'étuve (8) doit être effectué en atmosphère inerte.

Après séchage, le catalyseur sorti de l'étuve (8) par la ligne (16) est prêt à être réutilisé.

Les taux de la démétallation en pourcentage poids est déterminé à partir des dosages des métaux du catalyseur avant et après extraction des métaux par la méthode de fluorescence X. Il est calculé de la manière suivante :

$$\text{Taux de démétallation} = \frac{Qi - Qf}{Qi} \times 100$$

Qi = Quantité de métal en gramme contenu dans le poids en gramme du catalyseur mis à traiter.

Qf = Quantité de métal en gramme contenu dans le poids du solide après extraction.

Le péroxyde d'hydrogène en solution aqueuse est dosé par la méthode de Cérimétrie.

La consommation du péroxyde d'hydrogène exprimé en pourcentage molaire est déterminée par différence à partir des teneurs de la solution avant et après extraction des métaux.

$$\text{Consommation \% molaire} = \frac{Ni - Nf}{Ni} \times 100$$

Ni = Nombre total de mole de péroxyde d'hydrogène contenu dans le volume utilisé de la solution avant extraction des métaux.

Nf = nombre total de mole de péroxyde d'hydrogène contenu dans le volume de la solution après extraction des métaux.

Le soufre contenu dans la charge d'huile désasphaltée de BOSCAN avant et après tests catalytiques est déterminé par la méthode de fluorescence X.

L'hydrodésulfuration est exprimée en % HDS :

$$\text{\% HDS} = \frac{So - S}{So} \times 100$$

So = pourcentage de soufre dans la charge avant test catalytique

S = pourcentage de soufre dans la charge après test catalytique

Les métaux (nickel et vanadium) de la charge d'huile désasphaltée BOSCON sont déterminés par adsorption atomique et leurs taux d'élimination sont exprimés de la façon suivante :

$$\text{\% HDM} = \frac{Mo - M}{Mo} \times 100$$

Mo, M = teneurs en métal nickel, vanadium dans la charge d'huile désasphaltée BOSCAN avant et après le test catalytique.

Pour illustrer la présente invention, on fait référence aux exemples suivants :

Origine et caractéristiques du catalyseur

On traite un catalyseur usagé sous forme de billes d'environ 1 mm de diamètre, retiré d'un réacteur en lit fixe, servant à une opération industrielle d'une charge lourde de pétrole en Afrique du Sud.

Ce catalyseur que l'on appelle HMC 841 possède les caractéristiques indiquées dans le tableau 1 ci-dessous.

TABLEAU 1

|  | Catalyseur frais HMC 841 A | Catalyseur usagé et dé-huilé HMC 841 B | Catalyseur déhuilé et calciné HMC 841 C |
|---|---|---|---|
| Molybdène, % pds | 8,70 | 4,29 | 5,63 |
| Nickel, % pds | 2,38 | 4,82 | 6,34 |
| Vanadium, % pds | 0 | 10,35 | 13,60 |
| Aluminium, % pds | 44,47 | 23,37 | 30,70 |
| Carbone, % pds | 0 | 12,40 | 0,30 |
| Soufre, % pds | 0 | 14,90 | 2,17 |
| Densité de grain, $g/cm^3$ | 0,85 | n.d. | 1,48 |
| Volume poreux, $cm^3/g$ | 0,93 | 0.2 | 0,36 |
| Surface spécifique, $m^2/g$ | 135 | 10 | 71 |
| Résistance mécanique ESH, MPa | 0,99 | 2,13 | 1,34 |

A. Traitement d'un catalyseur usagé selon le mode opératoire 1 de l'invention.

Exemple 1

Le catalyseur usagé est d'abord strippé dans un appareillage de Sohxlet par du toluène chaud jusqu'à ce que le toluène au contact des billes de catalyseur soit incolore.

L'élimination totale et complète du solvant toluène est obtenue par évaporation à 150°C, sous-vide d'environ 15 cm Hg pendant 3 heures. Ce catalyseur déhuilé HMC 841 B ne sera ensuite sorti de l'évaporateur que lorsque que la température du bain d'huile thermostatée est redescendue à la température ambiante, et ce sous atmosphère inerte d'azote pour éviter toute oxydation des sulfures métalliques en sulfates, plus particulièrement des sulfures de molybdène $MoS_2$ et/ou $MoS_3$ du catalyseur usagé.

50 grammes de catalyseur provenant du strippage précédent sont mis dans un réacteur de lit bouillonnant pour la démétallation.

Huit essais d'extraction des métaux ont été effectués en vue de comparer le comportement les principaux composés organiques stabilisateurs selon l'invention.

Les conditions opératoires de ces essais sont les suivants:
- mise en contact du catalyseur déhuilé avec 300 millilitres d'une solution aqueuse contenant 2,72 moles de péroxyde d'hydrogène par litre et de 0,075 mole par litre du composé organique stabilisateur étudié.

La température du réacteur en lit bouillonnant est thermostatée à 60°C.

La vitesse linéaire de la phase liquide est égale à 3 cm/seconde.

La durée d'extraction des métaux est de 1 heure.

Les résultats obtenus sont présentés dans le tableau 2 ci-dessous :

TABLEAU 2

| Essais (Réf.) | Composé organique stabilisateur | Taux de la démétallation (% pds) | | |
|---|---|---|---|---|
| | | nickel | vanadium | Molybdène |
| A | Acide oxalique | 58,5 | 57,4 | 9,1 |
| B | Acide citrique | 51,0 | 54,2 | 13,7 |
| C | Acide tartrique | 51,5 | 55,5 | 16,3 |
| E | n-butanol | 51,0 | 40,9 | 25,9 |
| F | 1-4 butanediol | 52,8 | 44,4 | 20,1 |
| G | Phénol | 53,2 | 42,8 | 20,4 |
| H (comparaison) | O | 21,0 | 26,7 | 27,5 |
| I (comparaison) | $H_2O_2$ = O Acide oxalique | 2,9 | 3,7 | 0,3 |

Dans ce tableau, il ressort que l'absence de composé organique stabilisateur dans une solution aqueuse de péroxyde d'hydrogène (essai H) conduit à des taux d'extraction des métaux incomparablement inférieurs à ceux des essais utilisant ladite solution stabilisée.

Le meilleur composé organique stabilisateur s'avère être l'acide oxalique (essai A).

L'extraction de molybdène est très limitée seulement d'environ 9% autrement dit qu'il est possible de garder 91% de ce métal actif dans le catalyseur régénéré, ce qui constitue la caractéristique majeure de la présente invention.

Exemple 2

On répète le traitement d'extraction des métaux selon l'essai A de l'exemple 1 mais en utilisant des quantités plus importantes d'acide oxalique stabilisateur.

Tableau 3

| Essai | Concentration Acide oxalique mole/litre | Taux de la démétallation (% poids) | | |
|---|---|---|---|---|
| | | Nickel | Vanadium | Molybdène |
| A* | 0,075 | 58,5 | 57,4 | 9,1 |
| 1 | 0,150 | 59,1 | 59,6 | 8,7 |
| 2 | 0,225 | 59,5 | 59,4 | 8,9 |

\* Résultats de l'essai A de l'exemple 1 pour comparaison.

En doublant ou en triplant la quantité d'acide oxalique stabilisateur (essais 1 et 2), on ne constate qu'une très légère augmentation d'extraction des métaux contaminants. L'extraction de molybdène reste sensiblement la même aux erreurs expérimentales près. Pour obtenir donc à la fois une démétallation maximale des métaux contaminants et une extraction du métal actif du groupe molybdène la plus faible possible, l'utilisation d'une concentration d'acide oxalique stabilisateur comprise entre 0,075 à 0,08 mole par litre s'avère être suffisante.

Exemple 3

On répète le traitement d'extraction des métaux selon l'essai A de l'exemple 1 mais on utilise des volumes plus importants de solution aqueuse de péroxyde d'hydrogène stabilisée.

Tableau 4

| Essai | Volume de la solution aqueuse de péroxyde d'hydrogène stabilisée (ml) | Taux de la dématallation (% poids) | | |
|---|---|---|---|---|
| | | nickel | vanadium | molybdène |
| A* | 300 | 58,5 | 57,4 | 9,1 |
| 4 | 450 | 59,9 | 63,5 | 15,6 |
| 5 | 600 | 61,10 | 78,7 | 21,3 |

\* Résultats de l'essai A de l'exemple 1 pour comparaison.

On constate que l'utilisation d'un volume de solution aqueuse de péroxyde d'hydrogène stabilisée plus important de 50% (essai 4) ou de 100% (essai 5) n'engendre pas forcément une augmentation d'extraction des métaux de façon proportionnelle.

D'autre part, si l'extraction du vanadium peut être sensiblement améliorée, celle du molybdène suit une progression parallèle non négligeable, ce qui est défavorable pour la fonction hydrodésulfurante du catalyseur régénéré que l'on doit recycler et/ou réutiliser pour une nouvelle opération d'hydrotraitement d'une charge de pétrole. De plus, le coût de la régénération peut être nettement plus élevé par exemple cas de l'essai (5) par rapport à l'essai A pris comme référence.

En résumé, il en résulte qu'économiquement il est préférable de se limiter à un volume de solution aqueuse de péroxyde d'hydrogène stabilisée selon l'essai A.

Exemple 4

On répète le traitement d'extraction des métaux selon l'essai A de l'exemple 1 mais les essais sont effectués à différentes températures.

**Tableau 5**

| Essais | Température de réaction (°C) | Taux de démétallation (% pds) | | |
|--------|------------------------------|------------|------------|------------|
| | | Nickel | Vanadium | Molybdène |
| 6 | 25 | 35,5 | 38,2 | 8,1 |
| 7 | 40 | 47,1 | 48,7 | 8,2 |
| 8 | 50 | 50,9 | 53,4 | 8,8 |
| A* | 60 | 58,5 | 57,4 | 9,1 |
| 9 | 70 | 46,1 | 46,6 | 7,7 |

* Résultat de l'essai A de l'exemple 1 pour comparaison.

Le traitement à une température voisine de l'ambiante (essai 6) ne permet pas d'extraire suffisamment les métaux contaminants du groupe vanadium et nickel.

L'optimum de la démétallation desdits métaux est obtenu à 60°C (essai A).

Pour une température de traitement supérieure à cette valeur par exemple cas de l'essai 9, la stabilisation de la solution aqueuse de péroxyde d'hydrogène devient moins efficace, par voie de conséquence fait chuter sensiblement les taux d'extraction de vanadium et de nickel.

Exemple 5

On étudie l'influence de la vitesse linéaire de la phase liquide du lit bouillonnant sur le traitement de la régénération du catalyseur déhuilé en reproduisant l'essai A de l'exemple 1.

Tableau 6

| Essais | Vitesse linéaire (cm/s) | Taux de la démétallation (% pds) | | |
|---|---|---|---|---|
| | | Nickel | Vanadium | Molybdène |
| 10 | 1 | 35,8 | 38,7 | 7,1 |
| 11 | 2 | 46,9 | 47,2 | 7,6 |
| A * | 3 | 58,5 | 57,4 | 9,1 |
| 12 | 4 | 58,5 | 57,6 | 9,2 |

* Résultats de l'essai A de l'exemple 1 pour comparaison.

Une vitesse linéaire égale à 3 cm/s est suffisante pour obtenir la meilleure extraction de vanadium et de nickel.

Pour des valeurs inférieures, voire nettement inférieures par exemple cas de l'essai 10, on pense qu'un temps de contact plus long entre les ions des métaux extraits de la solution et du péroxyde d'hydrogène même stabilisée provoque une décomposition catalytique importante en eau et en oxygène gazeux au dépend de la démétallation desdits métaux des grains du catalyseur.

Exemple 6

On répète le traitement d'extraction des métaux selon l'essai A de l'exemple 1 et on détermine les taux de la démétallation du catalyseur traité en fonction de la durée de réaction.

12

Tableau 7

| Essais | Durée de réaction (mn) | Taux de démétallation (% pds) | | | Consommation $H_2O_2$ (% molaire) |
|---|---|---|---|---|---|
| | | Nickel | Vanadium | Molybdène | |
| 13 | 30 | 52,6 | 51,4 | 9,0 | 87 |
| A* | 60 | 58,5 | 57,4 | 9,1 | 100 |
| 14 | 90 | 58,6 | 57,3 | 9,2 | 100 |

* Résultats de l'essai A de l'exemple 1 pour comparaison.

Au bout d'une heure de réaction, la consommation du péroxyde d'hydrogène est totale. En pratique on estime qu'une durée de réaction peut se situer entre 45 à 60 minutes.

Exemple 7

On répète le traitement d'extraction des métaux selon l'essai A de l'exemple 1 mais on se propose d'étudier l'influence du volume d'eau de la solution de péroxyde d'hydrogène stabilisée, en gardant les mêmes quantités de péroxyde d'hydrogène et de l'acide stabilisateur dudit essai.

Tableau 8

| Essais | Volume d'eau permutée de la solution de péroxyde d'hydrogène stabilisé (ml) | Taux de la démétallation (%pds) | | |
|---|---|---|---|---|
| | | Nickel | Vanadium | Molybdène |
| 15 | 150 | 50,9 | 51,1 | 9,8 |
| A * | 300 | 58,5 | 57,4 | 9,1 |
| 16 | 450 | 58,7 | 57,3 | 9,0 |
| 17 | 600 | 58,7 | 57,5 | 9,0 |

\* Résultats de l'essai A de l'exemple 1 pour comparaison

Pour une concentration double en péroxyde d'hydrogène et en acide oxalique stabilisateur, les taux de la démétallation du nickel et du vanadium sont sensiblement inférieurs par comparaison à ceux de l'essai A pris comme référence.

On pense que ces diminutions d'extraction sont liées principalement à des concentrations plus élevées des ions de vanadium et de nickel présents dans la phase aqueuse réactionnelle, favorisant une décomposition catalytique plus importante du péroxyde d'hydrogène au dépend de la démétallation du catalyseur.

Les extractions de vanadium et de nickel atteignent pratiquement le maximum à partir d'un volume d'eau égale à 300 millilitres (essai A), ce qui devrait correspondre à un traitement d'un kilogramme de catalyseur avec 6 litres de la solution d'eau oxygénée stabilisée.

Il est évidemment avantageux de ne pas dépasser ce rapport volume d'eau permutée (litres)/quantité de catalyseur traité (kg) pour éviter les dimensions plus importantes du réacteur de la démétallation et le stockage et/ou le traitement éventuel d'un volume de solution également important pour les précipitations séparées des métaux extraits.

B. Traitement d'un catalyseur usagé selon le mode opératoire 2 de l'invention .

Example 8

200 grammes du catalyseur déhuilé HMC 841 B sont étalés dans un plateau en acier inoxydable et mis dans un four-étuve pour subir une calcination par de l'air. Le réglage de la température de calcination est effectué progressivement par palier de 100°C jusqu'à une température finale de 500°C pendant une durée totale de cinq heures, évitant ainsi toute surchauffe locale au niveau des billes du catalyseur.

Le débit d'air utilisé est de 30 litres par heure.

Les gaz toxiques dégagés sont constamment entraînés par le courant d'air vers l'extérieur et dirigés à travers une batterie de barbotteurs contenant une solution aqueuse de soude caustique à 30% poids, permettant ainsi une neutralisation efficace pour la protection de l'environnement.

50 grammes du catalyseur après calcination sont chargés dans un tube de quartz. La sulfuration est effectuée dans un four vertical type Adamel.

La température de sulfuration est fixée égale à 370°C. Le débit horaire d'un mélange gazeux contenant 3% de monosulfuré d'hydrogène dilué dans de l'hydrogène pur est de 20 litres.

L'excès de monosulfure d'hydrogène dans l'effluent gazeux sortant du réacteur de sulfuration est totalement neutralisé grâce à une série de barbotteurs contenant une solution aqueuse concentrée de soude caustique à 30% poids.

14

Au bout de cinq heures de sulfuration, on ramène la température du réacteur de sulfuration jusqu'à la température ambiante par un courant d'azote pur avant la décharge du catalyseur sulfuré, évitant ainsi au maximum une sulfatation du sulfure de molybdène.

La totalité du catalyseur ainsi sulfuré est transférée dans le réacteur de lit bouillonnant.

Le traitement d'extraction des métaux est effectué de façon tout à fait identique à l'essai A de l'exemple 1.

Tableau 9

| Essais | Référence mode opératoire selon l'invention | Taux de démétallation (%pds) | | |
|--------|---------------------------------------------|--------|----------|-----------|
| | | Nickel | Vanadium | Molybdène |
| 18 | 2 | 60,30 | 59,7 | 8,2 |
| A* | 1 | 58,5 | 57,4 | 9,1 |

\* Résultats de l'essai A de l'exemple 1 pour comparaison

Les résultats comparatifs de ce tableau montrent qu'on peut indifféremment régénérer un catalyseur d'hydrotraitement ou d'hydroconversion à l'état usagé par une solution aqueuse de péroxyde d'hydrogène stabilisée selon l'un quelconque des deux modes opératoires selon l'invention.

Exemple 9

Cet exemple a pour but d'illustrer et de comparer les activités catalytiques des catalyseurs nickel-molybdène/support alumine de départ, usagé et régénéré selon l'invention.

En référence au mode opératoire 1 selon l'invention, le catalyseur usagé HMC 841 a été démétallé selon l'essai A de l'exemple 1. Le catalyseur après démétallation était ensuite successivement calciné et sulfuré dans les conditions opératoires décrites dans l'exemple 8.

En référence au mode opératoire 2 selon l'invention, le même catalyseur usagé a été régénéré selon l'essai 18 de l'exemple 8. Le séchage du catalyseur avant son réutilisation était effectué sous atmosphère inerte d'azote à 200°C pendant 5 heures.

La charge de pétrole utilisée est une huile désasphaltée de Boscan contenant 550 ppm en vanadium, 60 ppm en nickel, 5,06% poids en soufre.

Les conditions opératoires des tests catalytiques sont les suivantes :

température 400°C, pression totale 100 bars, VVH = 1, durée d'hydrotraitement 100 heures.

Les taux d'hydrodémétallation de la charge en vanadium et nickel et les taux d'hydrodésulfuration sont présentés dans le tableau suivant.

**Tableau 10**

| | Taux de la démétallation de la charge en nickel et vanadium (% pds) | Taux d'hydrodésulfuration de la charge (% pds) | caractéristiques physiques des catalyseurs | | |
| --- | --- | --- | --- | --- | --- |
| | | | Volume poreux (cm3/g) | Surface spécifique (m2/g) | Résistance mécanique ESH (MPa) |
| Catalyseur frais | 96 | 54 | 0,93 | 135 | 0,99 |
| Catalyseur usagé et déhuilé | 53 | 39 | 0,27 | 15-18 | 2,12 |
| Catalyseur régénéré selon le mode 1 de l'invention | 84 | 51 | 0,72 | 64 | 1,29 |
| Catalyseur régénéré selon le mode 2 de l'invention | 85 | 52 | 0,74 | 67 | 1,27 |

Les résistances mécaniques ESH des catalyseurs régénérés sont supérieures à celles du catalyseur frais de départ de 16,36% si on calcule à partir de la valeur moyenne prise égale à 1,28 , ce qui ne pose aucun problème pour leur réutilisation en lit fixe pour une nouvelle opération d'hydrotraitement d'une charge de pétrole.

Bien que l'extraction des métaux contaminants du catalyseur usagé ne dépasse pas 58,5 à 60,30% poids en nickel et 57,4 à 59,7 en vanadium selon l'un quelconque des deux moles opératoires de l'invention (tableau 9), on constate que les activités catalytiques d'hydrodémétallation en nickel et vanadium se rapprochent de celles du catalyseur frais de départ.

Les résultats montrent qu'on peut retrouver, par rapport au catalyseur frais de départ une activité catalytique d'hydrodémétallation de la charge en nickel et vanadium de 84:96 soit 87,5% ou 85:96 soit 88,5%.

D'autre part, les catalyseurs régénérés selon le procédé de l'invention permettant d'obtenir une hydrodésulfuration particulièrement élevée de la charge traitée. Les taux d'hydrodésulfuration sont de 51:54 soit 94,4% ou 52:54 soit 96,3% par rapport à celui du catalyseur frais de départ; l'extraction très limitée de molybdène seulement de 8,2% ou 9,1% du catalyseur usagé explique ces performances.

Le procédé de régénération selon la présente invention s'applique donc aussi bien à l'hydrodémétallation qu'à l'hydrodésulfuration d'une charge lourde de pétrole.


## Revendications

1. Procédé de régénération d'un catalyseur au moins partiellement désactivé provenant du traitement d'une charge d'hydrocarbures renfermant au moins un hétéroélément du groupe soufre, oxygène et azote et au moins un métal du groupe vanadium, nickel et fer, ladite désactivation provenant du dépôt d'au moins un métal dudit groupe sur le catalyseur, ledit catalyseur étant constitué initialement d'un support minéral et d'au moins un métal actif ou un composé actif du groupe VIB et/ou VIII au moins en partie à l'état de sulfure; le procédé comportant une mise en contact de ce catalyseur avec une solution aqueuse de péroxyde d'hydrogène stabilisée selon les étapes successives suivantes :

    a) on soumet le catalyseur usagé à un strippage par un solvant hydrocarbure saturé ou aromatique de façon à éliminer totalement l'huile adhérente.
    b) on élimine ensuite complètement le solvant de strippage du catalyseur provenant de l'étape c) par tout moyen connu.
    c) on met en contact le catalyseur déhuilé provenant des deux étapes précédentes a) et b) avec une solution aqueuse de péroxyde d'hydrogène renfermant au moins un composé organique dit stabilisateur, comportant au moins un groupe fonctionnel polaire de façon à enlever au moins 10% des métaux déposés du groupe vanadium, nickel, fer et à ne provoquer qu'une extraction très limitée des métaux du groupe molybdène et/ou tungstène, et,
    d) on sépare le catalyseur démétallé de la solution d'extraction des métaux et,
    e) on sèche le catalyseur séparé de l'étape d) de façon à enlever au moins 90% d'humidité et,
    f) on calcine le catalyseur séché provenant de l'étape e) en présence d'un gaz renfermant de l'oxygène de façon à éliminer au moins 90% de carbone, et,
    g) on sulfure le catalyseur calciné provenant de l'étape f) en présence d'un mélange gazeux de monosulfure d'hydrogène et d'hydrogène de façon à transformer les oxydes métalliques au moins 90% en sulfures correspondants.

2. Procédé de régénération d'un catalyseur au moins partiellement désactivé provenant du traitement d'une charge d'hydrocarbures renfermant au moins un hétéroélément du groupe soufre, oxygène et azote et au moins un métal du groupe vanadium, nickel et fer, ladite désactivation provenant du dépôt d'au moins un métal dudit groupe sur le catalyseur, ledit catalyseur étant constitué initialement d'un support minéral et d'au moins un métal actif ou un composé actif du groupe VIB et/ou VIII au moins en partie à l'état de sulfure, le procédé comportant une mise en contact de ce catalyseur avec une solution aqueuse de péroxyde d'hydrogène stabilisée selon les étapes successives suivantes :

    a) on soumet le catalyseur usagé à un strippage par un solvant hydrocarbure saturé ou aromatique de façon à éliminer totalement d'huile adhérente.
    b) on élimine ensuite complètement le solvant du strippage du catalyseur provenant de l'étape a) par tout moyen connu, et,
    c) on calcine le catalyseur provenant de l'étape b) en présence d'un gaz contenant de l'oxygène de façon à éliminer au moins 90% de carbone et,
    d) on sulfure le catalyseur calciné provenant de l'étape c) en présence d'un gaz contenant du monosulfure d'hydrogène de façon à transformer les oxydes métalliques au moins 90% en sulfures correspondants, et,

e) on met en contact le catalyseur sulfuré provenant de l'étape d) avec une solution aqueuse de péroxyde d'hydrogène renfermant au moins un composé organique comportant au moins un composé organique polaire de façon à enlever au moins 10% des métaux du groupe vanadium, nickel, fer et a ne provoquer qu'une extraction très limitée des métaux du groupe molybdène et/ou tungstène, et,

f) on sépare le catalyseur démétallé de la solution d'extraction des métaux et,

g) on sèche le catalyseur séparé de l'étape f) en atmosphère inerte de façon à enlever au moins 90% d'humidité.

3.  Procédé de régénération selon l'une des revendications 1 et 2 caractérisé en ce que le support minéral du catalyseur est l'alumine ou la silice.

4.  Procédé de régénération selon l'une des revendications 1 à 3 caractérisé en ce que le composé organique stabilisateur est choisi parmi les acides carboxyliques, les alcools, les phénols et leurs mélanges.

5.  Procédé de régénération selon la revendication 4, caractérisé en ce que le composé organique dit stabilisateur est choisi dans le groupe formé par l'acide oxalique, l'acide citrique, l'acide tartrique, le 1-4 butanediol, le n-butanol, le phénol.

6.  Procédé de régénération selon l'une des revendications 1 à 5 caractérisé en ce que la concentration du péroxyde d'hydrogène dans l'eau est de 0,5 à 70% en poids, la concentration du composé organique comprise entre 0.1 gramme par litre et la saturation et en ce que la température d'extraction des métaux est de 0 à 90°C.

7.  Procédé de régénération selon l'une des revendications 1 à 6 caractérisé en ce que la concentration du péroxyde d'hydrogène dans l'eau est de 1 à 30% en poids, la concentration du composé organique stabilisateur est comprise entre 1 à 10 grammes par litre et la température de réaction comprise entre 40 et 60°C.

8.  Procédé de régénération selon l'une des revendications 1 à 7 caractérisé en ce que l'on opère la calcination du catalyseur séché en présence d'un gaz contenant de l'oxygène dont le débit horaire est tel que la teneur en anhydride sulfureux et/ou sulfurique à l'intérieur du four de calcination est à chaque instant inférieure à 10 ppm, à une température comprise entre 450-550°C et une durée de 3 à 6 heures.

9.  Procédé de régénération selon l'une des revendications 1 à 8 caractérisé en ce que l'on opère la sulfuration du catalyseur calciné en présence d'un gaz contenant du monosulfure d'hydrogène dont le débit horaire est compris 20 à 40 litres, à une température de 300 à 500°C et une durée de 2 à 5 heures.

**Patentansprüche**

1.  Verfahren zur Regenerierung eines zumindest teilweise desaktivierten Katalysators, der aus der Behandlung eines Einsatzstoffes aus Kohlenwasserstoffen stammt und der mindestens ein Heteroelement aus der Gruppe Schwefel, Sauerstoff und Stickstoff und mindestens ein Metall aus der Gruppe Vanadium, Nickel und Eisen enthält, wobei die besagte Desaktivierung von der Ablagerung von zumindest einem Metall aus der besagten Gruppe auf dem Katalysator bewirkt wird, wobei der besagte Katalysator ursprünglich aus einem mineralischen Träger und mindestens einem aktiven Metall oder einer aktiven Verbindung der Gruppe VIB und/oder VIII, mindestens teilweise in der Form von Sulfiden, besteht; das Verfahren umfaßt ein Inkontaktbringen dieses Katalysators mit einer stabilisierten wäßrigen Lösung von Wasserstoffperoxid gemäß der aufeinanderfolgenden, nachfolgend aufgeführten Schritte:

    a) der verbrauchte Katalysator wird einem Auswaschen durch einen gesättigten oder aromatischen Kohlenwasserstoff unterworfen, um auf diese Weise das gesamte anhaftende Öl zu entfernen.

    b) Anschließend wird das gesamte Auswasch-Lösungsmittel vom Katalysator aus Schritt a) durch jedes bekannte Mittel entfernt.

    c) Der entölte Katalysator aus den beiden vorhergehenden Schritten a) und b) wird mit einer wäßrigen Lösung von Wasserstoffperoxid in Kontakt gebracht, die mindestens eine als Stabilisator bezeichnete organische Verbindung enthält, die mindestens eine polare funktionelle Gruppe besitzt, um mindestens 10 % der abgelagerten Metalle der Gruppe Vanadium, Nickel, Eisen zu entfernen und lediglich eine sehr geringe Extraktion der Metalle der Gruppe Molybdän und/oder Wolfram zu verursachen, und,

    d) der entmetallisierte Katalysator wird von der Lösung zur Extraktion der Metalle abgetrennt, und,

e) der abgetrennte Katalysator aus Schritt d) wird getrocknet, um mindestens 90 % der Feuchtigkeit zu entfernen, und,

f) der aus Schritt e) stammende getrocknete Katalysator wird in Gegenwart eines Gases, das Sauerstoff enthält, getrocknet, um auf diese Weise mindestens 90 % des Kohlenstoffs zu entfemen, und,

g) der aus Schritt f) stammende kalzinierte Katalysator wird in Gegenwart eines gasförmigen Gemisches von Wasserstoffmonosulfid und Wasserstoff beschwefelt, um auf diese Weise die Metalloxide zu mindestens 90 % in die entsprechenden Sulfide zu verwandeln.

2. Verfahren zur Regenerierung eines zumindest teilweise desaktivierten Katalysators, der aus der Behandlung eines Einsatzstoffes aus Kohlenwasserstoffen stammt und der mindestens ein Heteroelement aus der Gruppe Schwefel, Sauerstoff und Stickstoff und mindestens ein Metall aus der Gruppe Vanadium, Nickel und Eisen enthält, wobei die besagte Desaktivierung von der Ablagerung von zumindest einem Metall aus der besagten Gruppe auf dem Katalysator bewirkt wird, wobei der besagte Katalysator ursprünglich aus einem mineralischen Träger und mindestens einem aktiven Metall oder einer aktiven Verbindung der Gruppe VIB und/oder VIII, mindestens teilweise in der Form von Sulfiden, besteht; das Verfahren umfaßt ein Inkontaktbringen dieses Katalysators mit einer stabilisierten wäßrigen Lösung von Wasserstoffperoxid gemäß der aufeinanderfolgenden, nachfolgend aufgeführten Schritte:

a) der verbrauchte Katalysator wird einem Auswaschen durch einen gesättigten oder aromatischen Kohlenwasserstoff unterworfen, um auf diese Weise das gesamte anhaftende Öl zu entfernen.

b) Anschließend wird das gesamte Auswasch-Lösungsmittel vom Katalysator aus Schritt a) durch jedes bekannte Mittel entfernt, und,

c) der aus Schritt b) stammende Katalysator wird in Gegenwart eines Gases, das Sauerstoff enthält, getrocknet, um auf diese Weise mindestens 90 % des Kohlenstoffs zu entfernen, und,

d) der aus Schritt c) stammende kalzinierte Katalysator wird in Gegenwart eines Gases, das Wasserstoffmonosulfid enthält, beschwefelt, um auf diese Weise die Metalloxide zu mindestens 90 % in die entsprechenden Sulfide zu verwandeln, und,

e) Der aus Schritt d) stammende beschwefelte Katalysator wird mit einer wäßrigen Lösung von Wasserstoffperoxid in Kontakt gebracht, die mindestens eine organische Verbindung enthält, die mindestens eine polare organische Verbindung enthält, um mindestens 10 % der Metalle der Gruppe Vanadium, Nickel, Eisen zu entfernen und lediglich eine sehr geringe Extraktion der Metalle der Gruppe Molybdän und/oder Wolfram zu verursachen, und,

f) der entmetallisierte Katalysator wird von der Lösung zur Extraktion der Metalle abgetrennt, und,

g) der abgetrennte Katalysator aus Schritt f) wird in Inertgasatmosphäre getrocknet, um mindestens 90 % der Feuchtigkeit zu entfernen.

3. Verfahren zur Regenerierung nach einem der Ansprüche 1 und 2, dadurch gekennzeichnet, daß der mineralische Katalysatorträger Aluminiumoxid oder Siliciumoxid ist.

4. Verfahren zur Regenerierung nach einem der Ansprüche 1 bis 3, dadurch gekennzeichnet, daß die organische Stabilisatorverbindung aus den Carbonsäuren, den Alkoholen, den Phenolen und ihren Gemischen ausgewählt wird.

5. Verfahren zur Regenerierung nach Anspruch 4, dadurch gekennzeichnet, daß die besagte organische Stabilisatorverbindung aus der von Oxalsäure, Zitronensäure, Weinsäure, 1,4-Butandiol, n-Butanol und Phenol gebildeten Gruppe ausgewählt wird.

6. Verfahren zur Regenerierung nach einem der Ansprüche 1 bis 5, dadurch gekennzeichnet, daß die Konzentration des Wasserstoffperoxids im Wasser zwischen 0,5 und 70 Gew.-% beträgt, die Konzentration der organischen Verbindung zwischen einschließlich 0,1 Gramm pro Liter und der Sättigung liegt und dadurch, daß die Temperatur zur Extraktion der Metalle zwischen 0 und 90 °C liegt.

7. Verfahren zur Regenerierung nach einem der Ansprüche 1 bis 6, dadurch gekennzeichnet, daß die Konzentration des Wasserstoffperoxids im Wasser zwischen 1 und 30 Gew.-% beträgt, die Konzentration der organischen stabilisierenden Verbindung zwischen einschließlich 1 bis 10 Gramm pro Liter und die Temperatur zur Extraktion der Metalle zwischen einschließlich 40 und 60 °C liegt.

8. Verfahren zur Regenerierung nach einem der Ansprüche 1 bis 7, dadurch gekennzeichnet, daß die Kalzinierung des getrockneten Katalysators in Gegenwart eines sauerstoffhaltigen Gases durchgeführt wird, dessen stündlicher Durchsatz entsprechend groß ist, daß der Gehalt an Schwefeldioxid und/oder Schwefeltrioxid zu jeder Zeit unterhalb von 10 ppm liegt und bei einer Temperatur zwischen einschließlich 450 - 550 °C und bei einer Dauer von 3 bis 6 Stunden.

9. Verfahren zur Regenerierung nach einem der Ansprüche 1 bis 8, dadurch gekennzeichnet, daß die Beschwefelung des kalzinierten Katalysators in Gegenwart eines Wasserstoffmonosulfid enthaltenden Gases durchgeführt wird, dessen stündlicher Durchsatz zwischen einschließlich 20 bis 40 Liter beträgt, bei einer Temperatur zwischen 300 bis 500 °C und bei einer Dauer von 2 bis 5 Stunden.

## Claims

1. Process for the regeneration of an at least partly deactivated catalyst resulting from the treatment of a hydrocarbon charge containing at least one heteroelement from the group sulphur, oxygen and nitrogen and at least one metal from the group vanadium, nickel and iron, said deactivation resulting from the deposition of at least one metal from said group on the catalyst, the catalyst being initially constituted by a mineral support and at least one active metal or an active compound of group VIB and/or VIII at least partly in the sulphide state, the process involving the contacting of said catalyst with a stabilized aqueous hydrogen peroxide solution according to the following successive stages :
   a) the spent catalyst undergoes stripping by a saturated or aromatic hydrocarbon solvent, so as to totally eliminate the adhering oil,
   b) this is followed by the complete elimination of the stripping solvent from the catalyst from stage a) by any known means,
   c) the deoiled catalyst from stages a) and b) is contacted with an aqueous hydrogen peroxide solution containing at least one so-called stabilizing organic compound having at least one polar functional group so as to remove at least 10% of the metals deposited from the group vanadium, nickel and iron and to produce a very limited extraction of the metals from the group molybdenum and/or tungsten, and,
   d) the demetallized catalyst is separated from the extraction solution of the metals,
   e) the separated catalyst from stage d) is dried, so as to remove at least 90% of the moisture,
   f) the dried catalyst from stage e) is calcined in the presence of a gas containing oxygen, so as to eliminate at least 90% of the carbon and
   g) the calcined catalyst from stage f) is sulphurized in the presence of a gaseous hydrogen sulphide-hydrogen mixture, so as to at least 90% transform the metal oxides into the corresponding sulphides.

2. Process for the regeneration of an at least partly deactivated catalyst resulting from the treatment of a hydrocarbon charge containing at least one heteroelement from the group sulphur, oxygen and nitrogen and at least one metal from the group vanadium, nickel and iron, said deactivation resulting from the deposition of at least one metal from said group on the catalyst, the catalyst being initially constituted by a mineral support and at least one active metal or an active compound of group VIB and/or VIII at least partly in the sulphide state, the process involving the contacting of said catalyst with a stabilized aqueous hydrogen peroxide solution according to the following successive stages :
   a) the spent catalyst undergoes stripping by a saturated or aromatic hydrocarbon solvent, so as to totally eliminate the adhering oil,
   b) this is followed by the complete elimination of the stripping solvent from the catalyst from stage a) by any known means,
   c) the catalyst from stage b) is calcined in the presence of a gas containing oxygen, so as to eliminate at least 90% of the carbon and to produce a very limited extraction of the metals from the group molybdenum and/or tungsten, and,
   d) the calcined catalyst from stage c) is sulphurized in the presence of a gas containing hydrogen monosulphide, so as to at least 90% transform the metal oxides into the corresponding sulphides,
   e) the sulphurized catalyst from stage d) is contacted with an aqueous hydrogen peroxide solution containing at least one organic compound having at least one polar organic compound in such a way as to remove at least 10% of the metals from the group vanadium, nickel and iron,
   f) the demetallized catalyst is separated from the extraction solution of the metals and
   g) the separated catalyst of stage f) is dried in an inert atmosphere, so as to remove at least 90% of the moisture.

3. Regenerating process according to claims 1 or 2, characterized in that the catalyst mineral support is alumina or silica.

4. Regenerating process according to any one of the claims 1 to 3, characterized in that the stabilizing organic compound is chosen from among carboxylic acids, alcohols, phenols and their mixtures.

5. Regenerating process according to claim 4, characterized in that the so-called stabilizing organic compound is chosen from the group formed by oxalic acid, citric acid, tartaric acid, 1,4 butane diol, n-butanol and phenol.

6. Regenerating process according to any oreof the claims 1 to 5, characterized in that the hydrogen peroxide concentration in the water is 0.5 to 70% by weight, the organic compound concentration between 0.1 g/l and saturation and in that the extraction temperature of the metals is 0 to 90°C.

7. Regenerating process according to any one of the claims 1 to 6, characterized in that the hydrogen peroxide concentration in the water is 1 to 30% by weight, the concentration of the organic stabilizing compound is between 1 and 10 g/l and the reaction temperature is between 40 and 60°C.

8. Regenerating process according to any one of the claims 1 to 7, characterized in that calcination of the dried catalyst takes place in the presence of a gas containing oxygen, whose hourly flow rate is such that the sulphurous and/or sulphuric anhydride content within the calcining kiln is at all times below 10 ppm, at a temperature between 450 and 550°C and a duration of 3 to 6 hours.

9. Regenerating process according to any one of the claims 1 to 8, characterized in that the sulphurization of the calcined catalyst takes place in the presence of a gas containing hydrogen monosulphide, whose hourly flow rate is between 20 and 40 litres, at a temperature of 300 to 500°C and a duration of 2 to 5 hours.